# EUROPEAN PATENT APPLICATION

(11) **EP 4 484 072 A1**
(43) Date of publication of application: **01.01.2025**
(21) Application number: 23767044.3
(22) Date of filing: 22.02.2023
(51) Int. Cl.: B25J 5/00, B25J 9/08, B25J 19/00, B25J 9/00, B62D 57/028, B25J 15/00, A47L 11/40

(54) **ROBOT**

(30) Priority: 11.03.2022 KR 20220030885
(71) Applicant: LG Electronics Inc., Yeongdeungpo-gu Seoul 07336 (KR)
(72) Inventor: CHOI, Dongkyu, Seoul 08592 (KR); BAEK, Seungmin, Seoul 08592 (KR); HONG, Eulpyo, Seoul 08592 (KR)
(74) Representative: Vossius & Partner Patentanwälte Rechtsanwälte mbB
(86) International application number: PCT/KR2023/002532
(87) International publication number: WO 2023/171942

(57) **Abstract**

The present disclosure relates to a robot and relates to a robot capable of performing operations in various modes by selectively coupling various types of lower functional modules to a robot body because the lower functional module detachably coupled to the robot body includes a lower functional module body forming an exterior and having a space therein, and a robot body fastening unit disposed at one side of the lower functional module body to fix the lower functional module body to the robot body when coupled.

## Description

### [Technical Field]

The present disclosure relates to a robot, and more specifically, to a robot capable of providing various services according to a user's command input.

### [Background Art]

Recently, with the advancement of a robot technology, the use of robots is increasing not only in industrial fields but also at home.

Home robots are robots that perform home tasks on behalf of people, such as helping with housework such as cleaning or controlling home appliances, or robots that act as a user's assistant or provide training to the user using artificial intelligence (AI), robots that replace companion animals, etc.

However, conventional home robots have limitations in that they perform only any one of the above functions and may not perform various functions depending on the user's needs or circumstances.

Meanwhile, there are not only robots that perform functions in a state of being fixed at a specific location but also movable mobile robots. In particular, in the case of robots used at home, the mobile robots that replace the user or move around the home while following the user are mainly used.

Among the mobile robots, two-wheeled robots with two wheels have advantages of being easy to store because they occupy a small area of ground and being easily used in homes with a relatively limited space due to a small rotation radius when the robot changes a direction.

However, the conventional two-wheeled robots have a limitation that a height of an obstacle at which the robots may pass is set in proportion to sizes of the wheels, and have a limitation that even when passing the obstacle, the robots may be not balanced due to an impact in a process of passing the obstacle, and thus the robot may fall over.

In particular, when home robots perform a function of transporting drinks or food, an object to be transported may spill or fall on the floor when the robot shakes.

As Patent Document 1, US Patent No. 10010784 is presented. Patent Document 1 relates to a suspension system with one wheel.

Patent Document 1 relates to a suspension device that has a four-bar linkage structure mounted in a vehicle with one wheel to restrict the wheel to only move up and down and absorbs an impact by arranging a damper on an end portion of the four-bar linkage.

However, since the deck is moved up by driving the damper in Patent Document 1, there is a problem that a height at which the deck may move up is limited.

In addition, since the four-bar linkage in Patent Document 1 is disposed at the side of the wheel, the wheel is exposed upward from the deck, and thus there is a problem that all areas of the deck cannot be used.

Meanwhile, the conventional robots need to be provided with functional modules to perform various additional functions according to the user's needs. In this case, the functional modules may be coupled to any one location in all directions of the robot.

However, in Patent Document 1, the functional modules cannot be disposed under the robot and should be coupled to an upper portion or any one of the left, right, front, or rear portion thereof. In this case, when the functional modules are disposed on the upper portion of the robot, the center of gravity of the entire robot assembly becomes higher than before, resulting in a problem that traveling is unstable. Alternatively, when the functional modules are disposed on the left, right, front, or rear portion of the robot, the entire area of the robot assembly increases, resulting in a problem that the robot may not travel in narrow places.

As Patent Document 2, Japanese Patent No. 5978423 is presented. Patent Document 2 relates to a crawler traveling search robot.

The crawler traveling search robot according to Patent Document 2 has an arm driving mechanism capable of controlling an inclined angle of a vehicle body by rotating an arm in a width direction of the vehicle body forward or backward to pressing a step. Therefore, the crawler traveling search robot according to Patent Document 2 may pass a step of about 15 cm or more.

However, to mount a functional module on a crawler traveling search robot according to Patent Document 2, the functional module should be mounted at a front, rear, or upper end of the vehicle body. However, in this case, there may be a problem that the arm driving mechanism gets caught on the functional module when the arm driving mechanism rotates.

### [Disclosure]

### [Documents of Related Art]

### [Patent Documents]

(Patent Document 1) US Patent No. 10010784
(Patent Document 2) Japanese Patent No. 5978423

### [Technical Problem]

The present disclosure has been made in efforts to solve the problems of the related art. Specifically, the present disclosure is directed to providing a robot that may be moved by at least two wheels and selectively coupled to modules capable of performing various types of functions to perform various functions according to situations.

In addition, the present disclosure is directed to providing a robot capable of minimizing a space of a coupled assembly even when modules for performing functions are coupled.

In addition, the present disclosure is directed to providing a robot in which a coupled assembly may stably travel even when modules for performing functions are coupled.

### [Technical Solution]

To achieve the objects, a robot according to the present disclosure includes a robot body in which a motor and a battery are accommodated, a leg unit coupled to each of both side surfaces of the robot body, a wheel unit rotatably coupled to the leg unit to roll along a ground, and a lower functional module detachably coupled to the robot body. The lower functional module includes a lower functional module body forming an exterior and having a space therein, and a robot body fastening unit disposed at one side of the lower functional module body to fix the lower functional module body to the robot body when coupled.

The lower functional module may include a rear guide protruding rearward from a rear surface of the lower functional module body. When viewed from the top, an outer end of the rear guide may be disposed in front of a center thereof. Alternatively, when viewed from the top, the rear guide may form a curved surface that is convex rearward. When viewed from one side, the rear guide may have a front end disposed under a rear end thereof.

The lower functional module may include a front stopper formed to protrude outward from the lower functional module body and having a rear surface disposed adjacent to a wheel of the robot body. In this case, the rear surface of the front stopper may have an upper end disposed in front of a lower end thereof. Alternatively, the front stopper may be disposed to be spaced apart from the wheel when the lower functional module is coupled to the robot body.

The lower functional module may include a guide light radiation unit configured to radiate guide light, which enables the robot body to be recognized, rearward.

The robot body fastening unit may include a coupling hook disposed above the lower functional module body and caught on one side of the robot body when the lower functional module is coupled to the robot body. In this case, the robot body fastening unit may further include a hook link which has one end adjacent to the coupling hook and in which the other end of the coupling hook is caught on the one end when the one end of the coupling hook is coupled to the robot body, and a hook switch adjacent to the other end of the hook link and releasing the catching the coupling hook when pressing the other end of the hook link.

The lower functional module may perform dry cleaning by including a suction motor disposed in the lower functional module body to generate a negative pressure, a suction unit disposed at an upstream of the suction motor to suction dust present in a cleaning area, and a dust bin disposed at a downstream of the suction motor to collect the dust.

The lower functional module may perform wet cleaning by including a mop disposed at one side of the lower functional module body to mop the cleaning area, and a water container disposed in the lower functional module body to store water and supply the water to the mop.

The lower functional module may transport an object to be transported by including a gripper arm movably coupled to the lower functional module body, and a gripper disposed on an end portion of the arm to fix the object to be transported.

To achieve the objects, a robot according to the present disclosure includes a robot body in which a motor and a battery are accommodated, a leg unit coupled to each of both side surfaces of the robot body, a wheel unit rotatably coupled to the leg unit to roll along a ground, and a lower functional module detachably coupled to the robot body and disposed between a left wheel and a right wheel when coupled to the robot body.

The robot body may include a lower cover forming a lower exterior of the robot, a coupling bar disposed on the lower cover and coupled to the lower functional module, and a charging terminal disposed on the lower cover and electrically connected to the lower functional module, and a virtual vertical line extending upward from a rotation center of the wheel may be disposed between the coupling bar and the charging terminal.

The lower functional module includes a lower functional module body forming an exterior and having a space therein, and a robot body fastening unit disposed at one side of the lower functional module body to fix the lower functional module body to the robot body when coupled.

Detailed matters of other embodiments are included in a detailed description and accompanying drawings.

### [Advantageous Effects]

As described above, according to the robot of the present disclosure, there are the following effects.

First, according to the robot of the present disclosure, the lower functional module may include the robot body fastening unit for fixing the lower functional module body and the lower functional module body to the robot body so that the lower functional module may be detachably coupled to the robot body. Therefore, the robot can perform operations in various modes by selectively coupling various types of lower functional modules to the robot body.

Second, according to the robot of the present disclosure, the lower functional module may be coupled to the space between the lower portion of the robot body and the pair of leg units, thereby minimizing the space of the entire robot to which the lower functional module is coupled.

Third, since the location of the center of gravity of the entire robot coupled becomes lower when the lower functional module is coupled to the robot body, the robot can stably travel.

The effects of the present disclosure are not limited to the above-described effects, and other effects that are not described will be able to be clearly understood by those skilled in the art from the above detailed description.

### [Description of Drawings]

FIG. 1 is a perspective view for describing a robot according to one embodiment of the present disclosure.
FIG. 2 is an exploded perspective view of the robot according to one embodiment of the present disclosure.
FIG. 3 is a front view of the robot according to one embodiment of the present disclosure.
FIG. 4 is a rear view of the robot according to one embodiment of the present disclosure.
FIG. 5 is a side view of the robot according to one embodiment of the present disclosure.
FIG. 6 is a bottom view of the robot according to one embodiment of the present disclosure.
FIG. 7 is a view for describing a state in which an upper functional module has been removed from the robot according to one embodiment of the present disclosure.
FIG. 8 is a view for describing a leg unit in the robot according to one embodiment of the present disclosure.
FIG. 9 is a view for describing a connection relationship of the leg unit in the robot according to one embodiment of the present disclosure.
FIG. 10 is a view for describing a second link in the robot according to one embodiment of the present disclosure.
FIG. 11 is a view for describing a structure for hiding an electric wire in the robot according to one embodiment of the present disclosure.
FIGS. 12 and 13 are views for describing a change in location of a wheel according to the movement of the leg unit in the robot according to one embodiment of the present disclosure.
FIG. 14 is a view for describing a relationship between the arrangement of the wheel and the arrangement for coupling with a lower functional module in the robot according to one embodiment of the present disclosure.
FIG. 15 is a perspective view of a robot in a state in which the lower functional module is coupled to a robot body in the robot according to a first embodiment of the present disclosure.
FIG. 16 is a perspective view of the robot in a state before the lower functional module is coupled to the robot body in the robot according to the first embodiment of the present disclosure.
FIG. 17 is a perspective view of the lower functional module according to the first embodiment of the present disclosure.
FIG. 18 is a plan view of the lower functional module according to the first embodiment of the present disclosure.
FIG. 19 is a right side view of the lower functional module according to the first embodiment of the present disclosure.
FIG. 20 is a view showing a state before a coupling bar is coupled to a coupling hook in the robot according to the first embodiment of the present disclosure.
FIG. 21 is a view showing a state after the coupling bar is coupled to the coupling hook in FIG. 20.
FIG. 22 is a right side view of the lower functional module having a wet cleaning function according to a second embodiment of the present disclosure.
FIG. 23 is a right side view of the lower functional module having a transport function according to a third embodiment of the present disclosure.

### [Mode for Invention]

Hereinafter, exemplary embodiments of the present disclosure will be described in detail with reference to the accompanying drawings.

Since the present disclosure may have various changes and various embodiments, specific embodiments are shown in the accompanying drawings and specifically described in the detail descriptions. This is not intended to limit the present disclosure to specific embodiments and should be construed to include all modifications, equivalents, and substitutes included in the spirit and technical scope of the present disclosure.

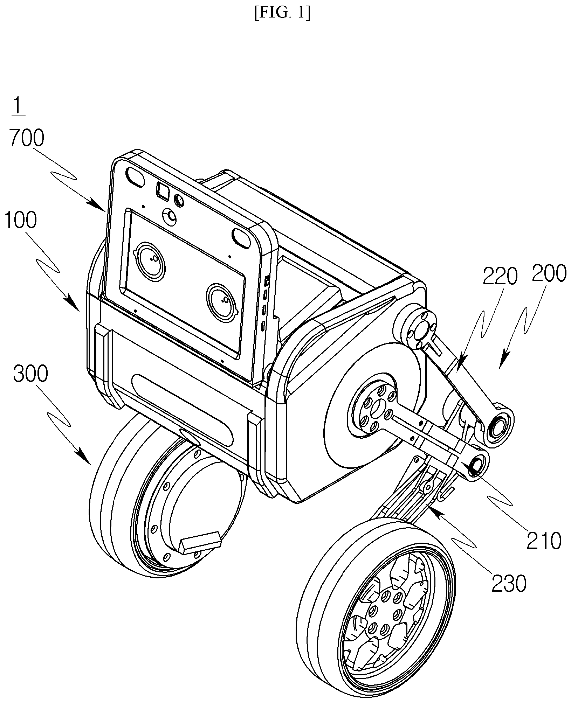

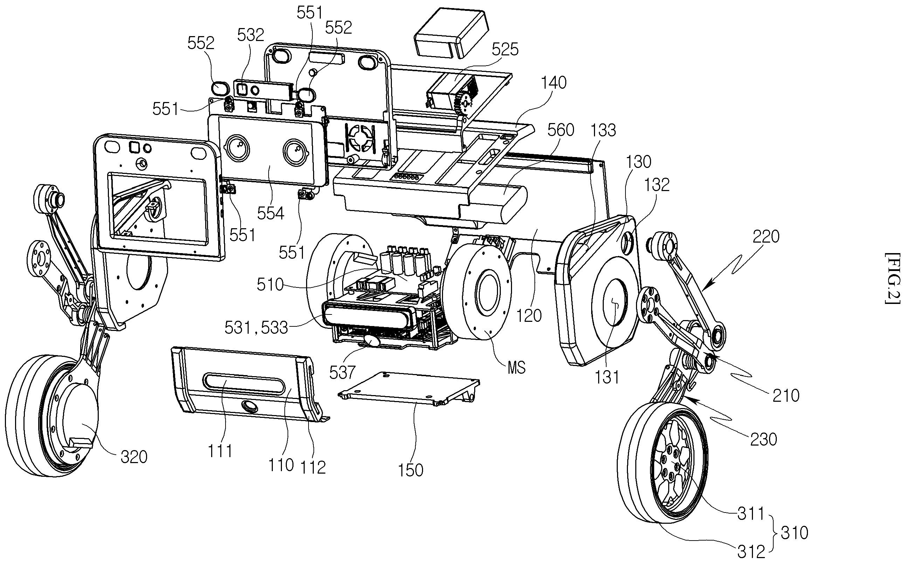

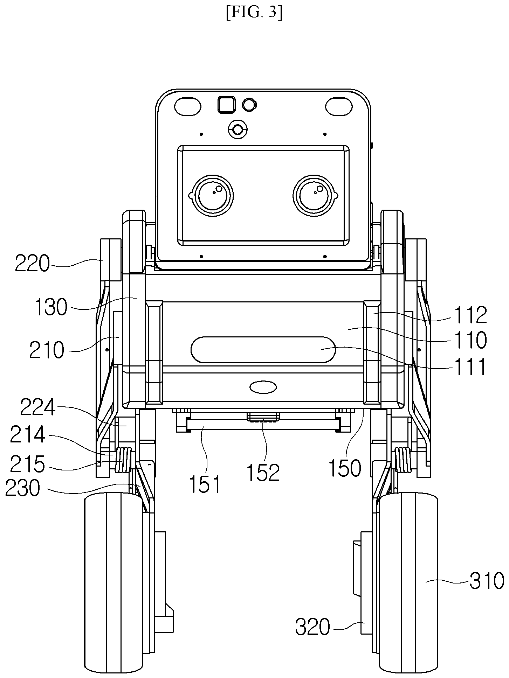

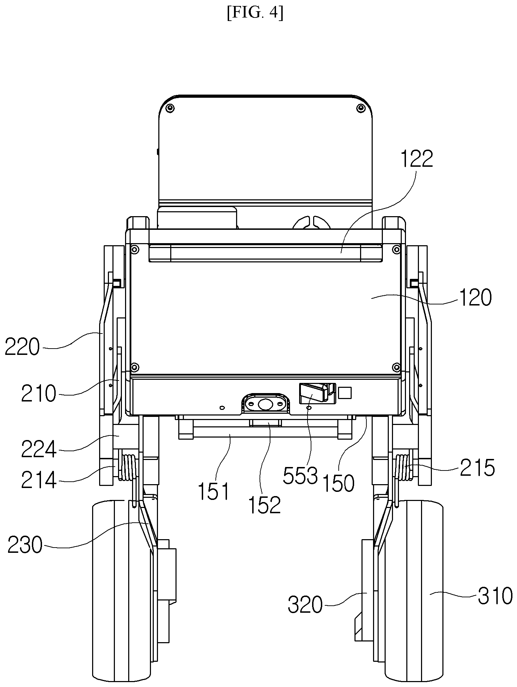

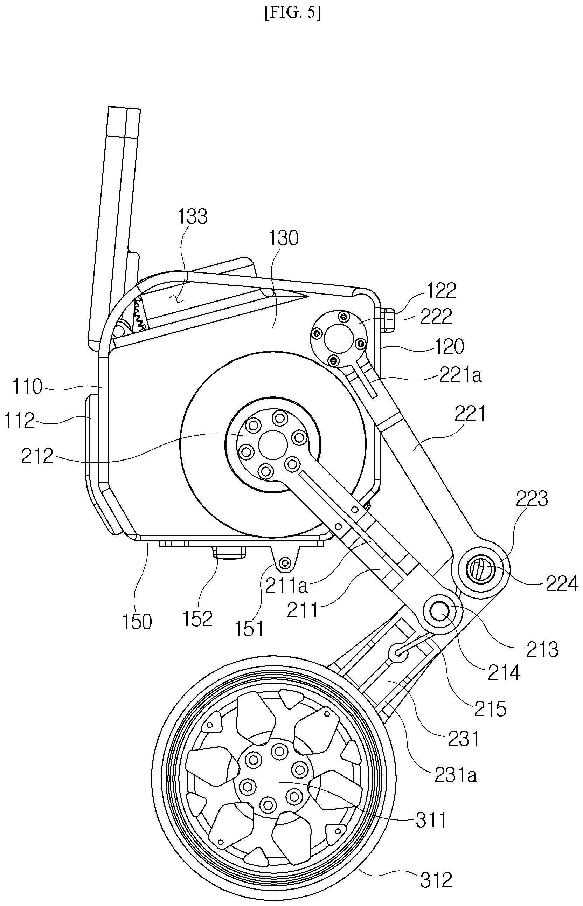

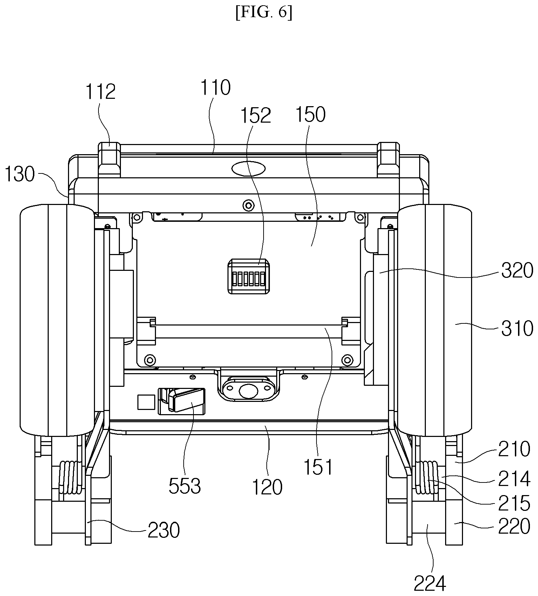

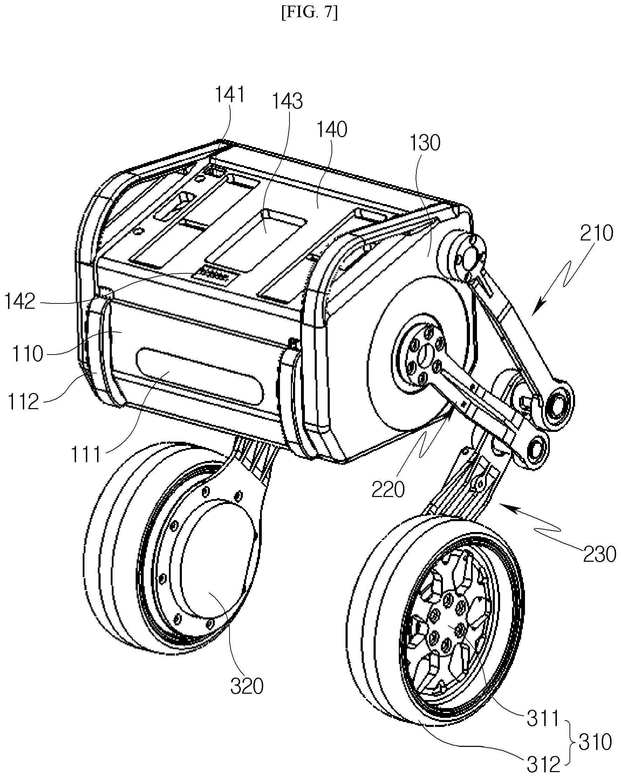

FIG. 1 is a perspective view for describing a robot according to one embodiment of the present disclosure, FIG. 2 is an exploded perspective view of FIG. 1, FIG. 3 is a front view of the robot according to one embodiment of the present disclosure, FIG. 4 is a rear view of the robot according to one embodiment of the present disclosure, FIG. 5 is a side view of the robot according to one embodiment of the present disclosure, FIG. 6 is a bottom view of the robot according to one embodiment of the present disclosure, and FIG. 7 is a view for describing a state in which an upper functional module has been removed from the robot according to one embodiment of the present disclosure.

Referring FIGS. 1 to 7, a robot 1 according to one embodiment of the present disclosure will be described as follows.

The robot 1 according to the embodiment of the present disclosure is placed on a floor to move along a floor surface B. Therefore, the following description will be made by setting a vertical direction based on a state in which the robot 1 is placed on the floor.

In addition, the following description will be made by setting a side at which a mapping camera to be described below is disposed with respect to a battery 600 as a front. In addition, the following description will be made by setting a direction opposite to the front as a rear with respect to the battery 600.

A "lowest portion" of each component described in the embodiment of the present disclosure may be a portion of each component that is located to be lowest when the robot 1 according to the embodiment of the present disclosure is used by being placed on the floor, or may be a portion closet to the floor.

The robot 1 according to the embodiment of the present disclosure includes a robot body 100, a leg unit 200, and a wheel unit 300. In this case, the leg unit 200 is coupled to both side surfaces of the robot body 100, and the wheel unit 300 is coupled to the leg unit 200.

The robot body 100 may form an exterior of the robot 1. Components constituting the robot 1 may be coupled to the robot body 100.

For example, the leg unit 200 is coupled to each of frames 130 of both side surfaces of the robot body 100. In addition, a bumper 112 may be coupled to a front cover 110 provided on a front surface of the robot body 100.

In particular, functional modules 700 and 800 may be detachably coupled to the robot body 100 according to one embodiment of the present disclosure. Here, the functional modules 700 and 800 may include the upper functional module 700 coupled to an upper portion of the robot body 100 and the lower functional module 800 coupled to a space between a pair of wheels 310.

Therefore, the upper functional module 700 may be detachably coupled to an upper cover 140 disposed at an upper side of the robot body 100. The lower functional module 800 may be detachably coupled to a lower cover 150 disposed at a lower side of the robot body 100.

With this configuration, it is possible to perform various functions by coupling the functional modules 700 and 800 to the robot body 100. In addition, a new function may be added to the function in use by replacing the functional modules 700 and 800, or a new function may be added to the function in use by additionally mounting the functional modules 700 and 800.

In the embodiment of the present disclosure, the robot body 100 may be formed in a shape that has a horizontal width (or a diameter) larger than a vertical height. The robot body 100 may assist the robot 1 to have a stable structure and provide a structure that is advantageous in maintaining balance when the robot 1 moves (travels).

Some components constituting the robot 1 may be accommodated inside the robot body 100. For example, an internal space of the robot body 100 may accommodate one or more motors including a suspension motor MS, one or more sensors, and the battery 600.

The robot body 100 includes a front cover 110. The front cover 110 constitutes a front exterior of the robot 1. That is, the front cover 110 may be disposed at the foremost portion of the robot 1 when the robot 1 travels forward.

For example, the front cover 110 of the robot body 100 may be formed in a flat shape. As another example, the front cover 110 may have a plate shape with a curved surface. As still another example, the front cover 110 may have a plate shape bent at a predetermined angle.

The front cover 110 may be provided with a window 111. The window 111 may be made of a material through which light may transmit. For example, the window 111 may be made of a material through which infrared (IR), visible rays, or ultraviolet (UV) rays may transmit.

The front cover 110 includes an outer surface exposed to the outside of the robot 1 and an inner surface disposed on a back surface of the outer surface.

The bumper 112 may be coupled to the outer surface of the front cover 110. That is, the bumper 112 may be disposed in front of the robot body 100. For example, the bumper 112 may be provided at both end portions of the outer surface of the front cover 110, and a pair of bumpers 112 may be disposed in parallel in a vertical direction.

The bumper 112 may be provided to move relatively with respect to the robot body 100. For example, the bumper 112 may be coupled to the robot body 100 to reciprocate in a front-rear direction of the robot body 100.

The bumper 112 may be coupled along a portion of a front edge of the front cover 110. Alternatively, the bumper 112 may be coupled along the entire edge of the front cover 110. With this configuration, when the robot 1 collides with another object or person, the bumper 112 can protect the robot body 100 and components accommodated inside the robot body 100 by absorbing an impact applied to the robot body 100.

A first camera 531 may be disposed behind the inner surface of the front cover 110. Specifically, the first camera 531 may be disposed immediately behind the window 111. With this configuration, the first camera 531 may detect objects or people disposed in front of the robot 1.

Meanwhile, although not shown, the front cover 110 may include an input unit through which a control command is input from a user, a display unit for visually conveying information about an operating state of the robot 1 to the user, etc. For example, the front cover 110 may include a touch screen for visually displaying the operating state of the robot 1 and allowing the control command to be input from the user.

The robot body 100 includes a rear cover 120.

The rear cover 120 constitutes a rear exterior of the robot 1. For example, the rear cover 120 may be formed in a flat plate shape. As another example, the rear cover 120 may have a plate shape with a curved surface.

A manipulation unit 553 for adjusting power of the robot 1 may be disposed on the rear cover 120.

The manipulation unit 553 may be manipulated by the user, and the robot 1 may be turned on or off by manipulating the manipulation unit 553.

The manipulation unit 553 may be provided on the rear cover 120 to pivot in a left-right direction or provided to pivot in the vertical direction according to an embodiment.

For example, when the user pushes one side of the manipulation unit 553 and the manipulation unit 553 pivots to one side, the robot 1 may be turned on. In addition, when the user pushes the other side of the manipulation unit 553 and the manipulation unit 553 pivots to the other side, the robot 1 may be turned off.

A rear bumper 122 may be coupled to an outer surface of the rear cover 120. That is, the rear bumper 122 may be disposed behind the robot body 100. For example, the rear bumper 122 may be provided on the outer surface of the rear cover 120 and may be disposed in the horizontal direction. With this configuration, when the robot 1 collides with another object or person, the bumper 122 can protect the robot body 100 and the components accommodated inside the robot body 100 by absorbing an impact applied to the robot body 100.

The robot body 100 includes a side frame 130.

The side frame 130 constitutes the exterior of both side surfaces of the robot 1. For example, the side frame 130 may be disposed on each of both side surfaces of the robot 1 and configured to face each other. For example, the side frame 130 may be formed in a flat plate shape. As another example, at least a portion of the side frame 130 may be formed in a curved shape.

The side frame 130 is coupled to the front cover 110 and the rear cover 120. The side frame 130 may connect the front cover 110 to the rear cover 120. With this configuration, the robot body 100 may have an internal space surrounded by the front cover 110, the rear cover 120, and the two side frames 130.

The leg unit 200 may be disposed outside the side frame 130. Specifically, a first link 210 and a second link 220 may be rotatably coupled to the outside of the side frame 130.

Generally, in a two-wheeled robot, a support structure is disposed vertically under the robot body to support a load of the robot. However, when the support structure is present vertically under the robot body, there is a limitation in that a space under the robot cannot be used.

To solve this, the robot 1 according to the embodiment of the present disclosure has the leg unit 200 coupled to the side frame 130.

The suspension motor MS may be disposed inside the side frame 130.

Link coupling holes 131 and 132 are formed in the side frame 130. The link coupling holes include the first link coupling hole 131 and the second link coupling hole 132.

The first link coupling hole 131 is formed in a circular hole shape in the side frame 130. At least a portion of the first link 210 may be rotatably accommodated in the first link coupling hole 131. For example, one end portion of the first link 210 may be coupled to a shaft of the suspension motor MS through the first link coupling hole 131.

The second link coupling hole 132 is formed in a circular hole shape in the side frame 130. At least a portion of the second link 220 may be rotatably accommodated in the second link coupling hole 132. For example, the shaft formed at one side of the second link 220 may be rotatably coupled by passing through the second link coupling hole 132.

Meanwhile, the first link coupling hole 131 may be formed to have a larger diameter than the second link coupling hole 132.

The first link coupling hole 131 and the second link coupling hole 132 may be formed at a predetermined interval. For example, the center of the first link coupling hole 131 in a circular hole shape and the center of the second link coupling hole 132 in a circular hole shape may be disposed at the predetermined interval.

The first link coupling hole 131 and the second link coupling hole 132 may be disposed at a predetermined inclination with respect to the ground. For example, in a state in which the robot 1 is placed on the ground, the first link coupling hole 131 may be disposed at a lower side of the side frame 130, and the second link coupling hole 132 may be disposed at an upper rear side of the side frame 130.

With this configuration, the side frame 130 in which the link coupling holes 131 and 132 are formed may function as a kind of link.

Meanwhile, according to an embodiment, a handle hole 133 may be formed in the side frame 130. For example, the handle hole 133 may be formed at an upper front side of the side frame 130. With this configuration, the user may lift the robot body 100 upward by inserting his/her hand into the handle hole 133 and gripping the side frame 130.

The upper cover 140 constitutes an upper exterior of the robot 1. The upper cover 140 is coupled to the front cover 110, the rear cover 120 and the two side frames 130. Therefore, the upper cover 140 may cover an upper side of the internal space surrounded by the front cover 110, the rear cover 120, and the two side frames 130.

In a state in which the robot 1 is placed on the ground, the upper cover 140 may be disposed to be inclined at a predetermined angle with respect to the ground. For example, a front end portion of the upper cover 140 may be disposed closer to the ground than a rear end portion thereof is.

The upper functional module 700 may be coupled to the upper cover 140. The upper functional module 700 may be detachably coupled to an upper side of the upper cover 140. For example, a hook accommodation groove 141 may be formed to be hook-coupled to the upper functional module 700 in the upper cover 140. With this configuration, the upper functional module 700 may be coupled to the robot body 100 by only a user's simply operation of pushing the hook of the upper functional module 700 into the hook accommodation groove 141.

The robot body 100 may supply power to the upper functional module 700. Specifically, the upper cover 140 may include a terminal through which power may be supplied to the upper functional module 700.

In addition, the robot body 100 may transmit and receive signals to the upper functional module 700. Specifically, the upper cover 140 may include the terminal through which the signals may be transmitted and received to and from the upper functional module 700.

Meanwhile, in the embodiment of the present disclosure, the terminal through which power may be supplied to the upper functional module 700 and the terminal through which the signals may be transmitted and received to and from the upper functional module 700 may be disposed together on the upper cover 140. For example, the upper cover 140 may include a pogo pin 142 including two power pins and four signal pins.

At least one guide groove 143 may be formed in the upper cover 140. Alower surface of the upper functional module 700 may be coupled to the guide groove 143. With this configuration, the guide groove 143 may guide a coupling location of the upper functional module 700.

The lower cover 150 forms a lower exterior of the robot 1. The lower cover 150 is coupled to the front cover 110, the rear cover 120, and the two side frames 130. Therefore, the lower cover 150 may cover a lower side of the internal space surrounded by the front cover 110, the rear cover 120, and the two side frames 130.

The lower functional module 800 may be coupled to the lower cover 150. The lower functional module 800 may be detachably coupled to a lower side of the lower cover 150. Specifically, the lower cover 150 may include a coupling bar 151 to be latch-coupled to the lower functional module 800.

The coupling bar 151 may be formed in a cylindrical shape and disposed in the left-right direction of the robot 1. In addition, a pair of protrusions connected to the coupling bar 151 may be formed to protrude from the lower cover 150.

The lower cover 150 may include a charging terminal 152. The charging terminal 152 may be disposed on a lower surface of the lower cover 150.

In this case, the charging terminal 152 may be disposed at a location facing the charging terminal provided on a robot charging station (not shown). The charging terminal 152 may be electrically connected to a charging terminal provided on the robot charging station (not shown). The robot 1 may receive power from the robot charging station (not shown) through the charging terminal 152. In addition, the power supplied to the charging terminal 152 may be supplied to the battery 600.

Meanwhile, in general, in the two-wheeled robot, the support structure is disposed vertically under the robot body to support the load of the robot. However, when the support structure is present vertically under the robot body, there is a limitation in that the space under the robot cannot be used.

To solve this, the robot 1 according to one embodiment of the present disclosure has the leg unit 200 disposed on both side surfaces of the robot body 100. Therefore, a module coupling space 153 to which the lower functional module 800 is coupled is formed at the lower side of the lower cover 150.

The module coupling space 153 may be formed between the pair of leg units 200. For example, the module coupling space 153 may be a space vertically under the coupling bar 151. That is, the module coupling space 153 may be a space having a predetermined width ΔS in the left-right direction.

With this configuration, according to the robot 1 according to the embodiment of the present disclosure, the lower functional module 800 may be coupled to a space between the lower portion of the robot body 100 and the pair of leg units 200, thereby minimizing a volume in a state in which the lower functional module 800 is coupled to the robot 1.

Meanwhile, although not shown, according to an embodiment, the robot body 100 may further include an external case. The external case may constitute the overall exterior of the robot body 100. The external case may cover the exteriors of the front cover 110, the rear cover 120, the side frame 130, the upper cover 140, and the lower cover 150. For example, the external case may be formed in an elliptical shape formed to extend in the left-right direction.

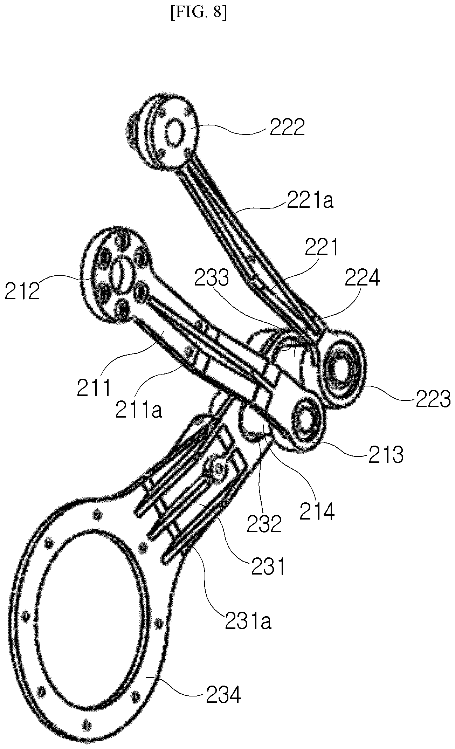

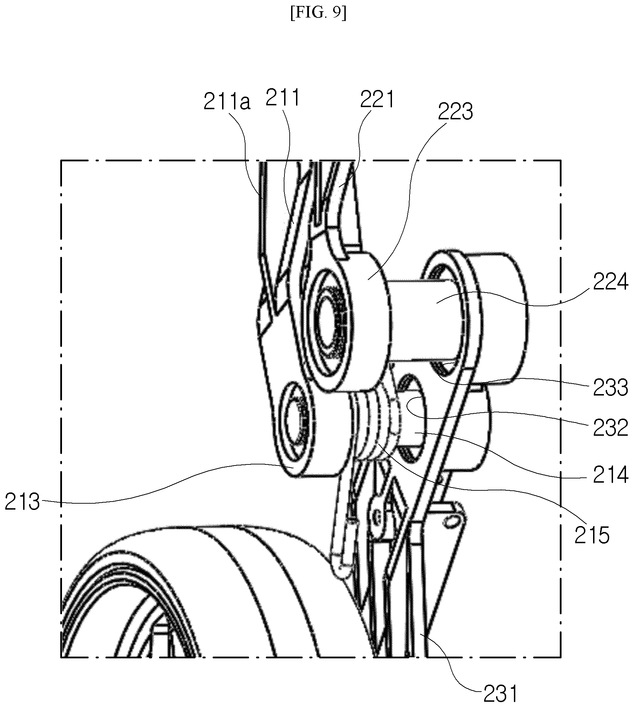

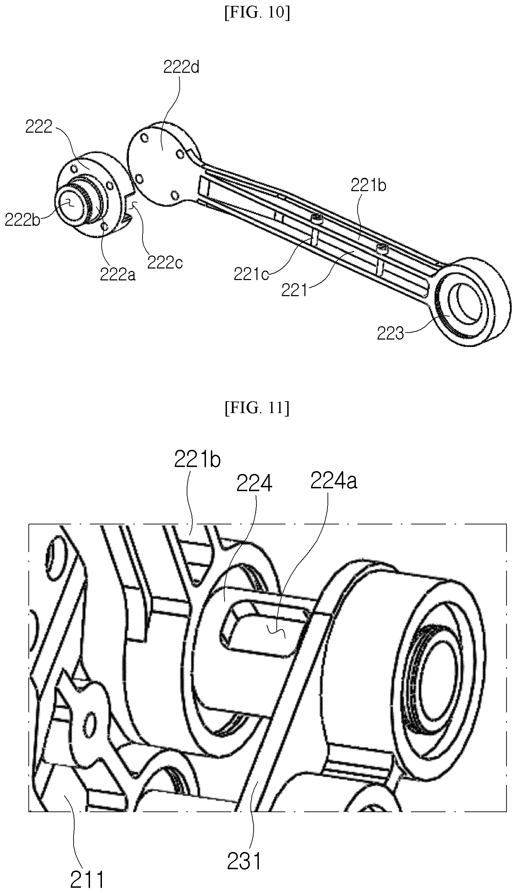

FIG. 8 is a view for describing a leg unit in the robot according to one embodiment of the present disclosure, FIG. 9 is a view for describing a connection relationship of the leg unit in the robot according to one embodiment of the present disclosure, FIG. 10 is a view for describing a second link in the robot according to one embodiment of the present disclosure, and FIG. 11 is a view for describing a structure for hiding an electric wire in the robot according to one embodiment of the present disclosure.

The leg unit 200 of the robot 1 according to one embodiment of the present disclosure will be described with reference to FIGS. 8 to 11 as follows.

The leg unit 200 may be coupled to the robot body 100 to support the robot body 100. For example, a pair of leg units 200 are provided and are each coupled to the side frame 130 of the robot body 100. In this case, at least a portion of the leg unit 200 is disposed closer to the ground than the robot body 100. Therefore, the robot body 100 may be supported by the pair of leg units 200. That is, gravity applied to the robot body 100 may be supported by the leg unit 200, and a height of the robot body 100 can be maintained.

In the robot 1 according to one embodiment of the present disclosure, the leg unit 200 is coupled to only both side surfaces of the robot body 100. That is, the leg unit 200 is not coupled to the lower and rear surfaces of the robot body 100.

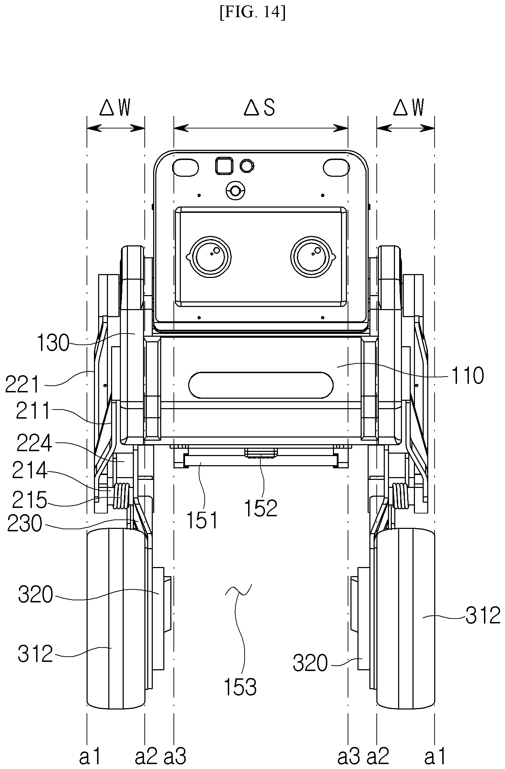

Therefore, as shown in FIG. 14, a space 153 (module coupling space) is formed between the lower side of the lower cover 150 and the pair of leg units 200. For example, a space in which a rectangular parallelepiped-shaped lower functional module 800 may be accommodated may be formed between the lower side of the lower cover 150 and the pair of leg units 200.

The leg unit 200 includes the first link 210, the second link 220, and the third link 230. In this case, the first link 210 and the second link 220 are rotatably coupled to the side frame 130 and the third link 230, respectively. That is, the first link 210 and the second link 220 are link-coupled to the side frame 130 and the third link 230, respectively.

The first link 210 is link-coupled to the side surface of the robot body 100. For example, the first link 210 may be link-coupled to the side frame 130.

The first link 210 is connected to the suspension motor MS. For example, the first link 210 may be connected to the shaft of the suspension motor MS directly or through a gear. With this configuration, the first link 210 receives a driving force from the suspension motor MS.

The first link 210 includes a first link body 211, a motor coupling portion 212, and a link coupling portion 213.

The first link body 211 is formed in an extended frame shape, the motor coupling portion 212 is provided at one side in a longitudinal direction, and the link coupling portion 213 is provided at the other side in the longitudinal direction. In this case, the motor coupling portion 212 may be disposed farther from the ground than the link coupling portion 213.

The first link body 211 may be formed in a shape that is bent at least once. For example, the other side of the first link body 211 provided with the link coupling portion 213 may be disposed farther from the robot body 100 than the one side provided with the motor coupling portion 212.

Therefore, a distance between the pair of first link bodies 211 increases from the top to the bottom in the vertical direction. With this configuration, the first link 210 can stably support the robot body 100.

A rib 211a may be formed on the first link body 211. For example, the rib may be formed to protrude from the first link body 211 in the longitudinal direction. In this case, the rib 211a may be formed in an area in which the first link body 211 is bent. With this configuration, the rib 211a can increase durability by reinforcing the first link 210.

The motor coupling portion 212 is formed to be connected to one end portion of the first link body 211.

The motor coupling portion 212 is rotatably accommodated in the first link coupling hole 131 of the side frame 130. For example, the motor coupling portion 212 may be formed in a disk shape or a circular panel shape. In this case, a maximum diameter of the motor coupling portion 212 may be equal to or smaller than a maximum diameter of the first link coupling hole 131. Therefore, the motor coupling portion 212 may be connected to the suspension motor MS through the first link coupling hole 131.

The motor coupling portion 212 is connected to the suspension motor MS. For example, the motor coupling portion 212 is fixedly coupled to the shaft of the suspension motor MS. With this configuration, when the suspension motor MS is driven, the motor coupling portion 212 may be rotated in conjunction with the rotation of the shaft of the suspension motor MS.

The link coupling portion 213 is formed to be connected to the other end portion of the first link body 211.

The link coupling portion 213 is rotatably coupled to the third link 230. Specifically, the link coupling portion 213 is rotatably coupled to the third link 230 through a first link shaft 214. For example, the link coupling portion 213 may be formed in a disk shape, and the first link shaft 214 may be coupled by passing through the center of the link coupling portion 213. In addition, the first link shaft 214 may be rotatably coupled by passing through the third link 230. With this configuration, the first link 210 and the third link 230 may be connected to rotate relatively.

The first link shaft 214 is provided to connect the first link 210 to the third link 230. For example, the first link shaft 214 may be coupled by passing through the link coupling portion 213 of the first link 210 and/or the third link 230. In this case, the first link shaft 214 may be rotatably coupled to the link coupling portion 213 and/or the third link 230. With this configuration, the first link shaft 214 may be an axis about which the third link 230 rotates.

A gravity compensator 215 compensates for the robot body 100 that moves down vertically due to gravity. That is, the gravity compensator 215 provides a force for supporting the robot body 100.

For example, the gravity compensator 215 may be a torsion spring. The gravity compensator 215 may be wound to surround an outer circumferential surface of the first link shaft 214. In addition, one end portion of the gravity compensator 215 is coupled to the first link 210, and the other end portion of the gravity compensator 215 is coupled to the third link 230.

The gravity compensator 215 applies a force in a direction in which an angle between the first link 210 and the third link 230 increases. For example, angles of both end portions of the gravity compensator 215 decrease in advance to apply a restoring force in a direction in which the angle between the first link 210 and the third link 230 increases. Therefore, even when the robot 1 is placed on the ground and gravity is applied to the robot body 100, the angle between the first link 210 and the third link 230 can be maintained within a predetermined angle range.

With this configuration, it is possible to prevent the robot body 100 from moving down toward the ground even when the suspension motor MS is not driven. Therefore, the gravity compensator 215 prevents energy loss due to driving the suspension motor MS and maintains the height of the robot body 100 to a predetermined distance or more from the ground.

The second link 220 is link-coupled to the side surface of the robot body 100. For example, the second link 220 may be link-coupled to the side frame 130. That is, the second link 220 may be coupled to the side frame 130 to which the first link 210 is coupled together.

The second link 220 includes a second link body 221, a frame coupling portion 222, and a link coupling portion 223. In this case, the frame coupling portion 222 may be disposed farther from the ground than the link coupling portion 223.

The second link body 221 is formed in an extended frame shape, the frame coupling portion 222 is provided at one side in a longitudinal direction, and the link coupling portion 223 is provided at the other side in the longitudinal direction.

The second link body 221 may be formed in a shape that is bent at least once. For example, the other side of the second link body 221 provided with the link coupling portion 223 may be disposed farther from the robot body 100 than the one side provided with the frame coupling portion 222. Therefore, a distance between the pair of second link bodies 221 increases from the top to the bottom in the vertical direction. With this configuration, the second link 220 can stably support the robot body 100.

The second link body 221 includes an inner surface facing the robot body 100 and an outer surface facing a direction away from the robot body 100.

A rib 221a may be formed on the second link body 221. For example, the rib 221a may be formed to protrude from the outer surface of the second link body 221 in the longitudinal direction. In this case, the rib 221a may be formed in an area in which the second link body 221 is bent. With this configuration, the rib 221a can increase durability by reinforcing the second link 220.

An electric wire accommodation wall 221b may be formed on the second link body 221. For example, a pair of electric wire accommodation walls 221b may be formed to protrude from the inner surface of the second link body 221 in the longitudinal direction. In this case, the pair of electric wire accommodation walls 221b may be formed in parallel at a predetermined interval. With this configuration, the electric wire may be accommodated in the space surrounded by the second link body 221 and the electric wire accommodation walls 221b. Therefore, it is possible to prevent the electric wire from being exposed to the outside.

Meanwhile, the internal space formed between the pair of electric wire accommodation walls 221b may communicate with an electric wire through hole 222c to be described below. With this configuration, the electric wire passing through the electric wire through hole 222c may be accommodated in the internal space formed between the electric wire accommodation walls 221b, thereby preventing the electric wire from being exposed to the outside.

In addition, the second link 220 may be provided with an electric wire support pin 221c. The electric wire support pin 221c may pass through the pair of electric wire accommodation walls 221b. The electric wire support pin 221c may be disposed in a direction crossing the pair of electric wire accommodation walls 221b. With this configuration, the electric wire accommodation wall 221b may close an open area in the space surrounded by the second link body 221 and the electric wire accommodation walls 221b. Therefore, it is possible to prevent the electric wire from coming out of the space surrounded by the second link body 221 and the electric wire accommodation walls 221b.

The frame coupling portion 222 is formed to be connected to one end portion of the second link body 221.

The frame coupling portion 222 is rotatably coupled to the second link coupling hole 132 of the side frame 130. For example, the frame coupling portion 222 may be provided with a coupling shaft 222a coupled by passing through the side frame 130.

The coupling shaft 222a may be formed in a cylindrical shape. For example, an outer diameter of the other end portion of the coupling shaft 222a may be larger than an outer diameter of one end portion of the coupling shaft 222a coupled to the side frame 130 in an axial direction (longitudinal direction).

A hollow 222b may be formed in the coupling shaft 222a. The electric wire may pass through the hollow 222b. With this configuration, it is possible to prevent the electric wire through which power is supplied from the battery 600 to a wheel motor MW from being exposed to the outside.

In addition, the electric wire through hole 222c may be formed in the coupling shaft 222a. The electric wire through hole 222c may be formed on an outer circumferential surface of the other end portion of the coupling shaft 222a in the axial direction. With this configuration, in the robot body 100, the electric wire passing through the hollow 222b may pass through the electric wire through hole 222c and may be accommodated in the second link body 221.

The coupling shaft 222a may be coupled to a rotational connection plate 222d. For example, the rotational connection plate 222d may be formed in a disk shape, and a diameter of the rotational connection plate 222d may be formed to be smaller than a diameter of the other end portion of the coupling shaft 222a in the axial direction. Therefore, the rotational connection plate 222d may be coupled by being accommodated in the other end portion of the coupling shaft 222a in the axial direction.

The rotational connection plate 222d may be formed integrally with the second link body 221. An outer end portion of the rotational connection plate 222d in a radial direction may be formed to be connected to the second link body 221. With this configuration, the rotational connection plate 222d may couple the second link body 221 to the coupling shaft 222a.

The link coupling portion 223 is formed to be connected to the other end portion of the second link body 221.

The link coupling portion 223 is rotatably coupled to the third link 230. Specifically, the link coupling portion 223 is rotatably coupled to the third link 230 through a second link shaft 224. For example, the link coupling portion 223 may be formed in a disk shape, and the second link shaft 224 may be coupled by passing through the center of the link coupling portion 223. In addition, the second link shaft 224 may be rotatably coupled by passing through the third link 230. With this configuration, the second link 220 and the third link 230 may be connected to rotate relatively.

The second link shaft 224 is provided to connect the second link 220 to the third link 230. For example, the second link shaft 224 may be coupled by passing through the link coupling portion 223 of the second link 220 and/or the third link 230. In this case, the second link shaft 224 may be rotatably coupled to the link coupling portion 223 and/or the third link 230. With this configuration, the second link shaft 224 may be an axis about which the third link 230 rotates.

The third link 230 is link-coupled to the first link 210 and the second link 220 and coupled to the wheel unit 300.

The third link 230 includes a third link body 231. The third link body 231 is formed in an extended frame shape, a third link coupling hole 232 and a fourth link coupling hole 233 are formed at one side thereof in the longitudinal direction, and a wheel coupling portion 234 is formed at the other side in the longitudinal direction.

The third link body 231 may be formed in a shape that is bent at least once. For example, a pair of third link bodies 231 have a distance between the other sides at which the wheel coupling portion 234 is formed, which is shorter than a distance between one sides at which the third link coupling hole 232 and the fourth link coupling hole 233 are formed.

At least one rib 231a may be formed to protrude from the third link body 231 in the longitudinal direction. The rib 231a may be formed in a bent area of the third link body 231. With this configuration, the rib may reinforce the third link body 231.

The third link coupling hole 232 is formed in the third link body 231. Specifically, the third link coupling hole 232 is formed at one side of the third link body 231 in the longitudinal direction. The first link shaft 214 may be rotatably coupled by passing through the third link coupling hole 232. For example, the third link coupling hole 232 may be formed in a circular hole shape. With this configuration, the third link 230 may be rotatably connected to the first link 210 through the first link shaft 214.

A hole into which the gravity compensator 215 is coupled may be formed in the third link body 231. For example, the other end portion of the torsion spring may be coupled by being inserted into the hole.

The fourth link coupling hole 233 is formed in the third link body 231. Specifically, the fourth link coupling hole 233 is formed at one side of the third link body 231 in the longitudinal direction. The second link shaft 224 may be rotatably coupled by passing through the fourth link coupling hole 233. For example, the fourth link coupling hole 233 may be formed in a circular hole shape. With this configuration, the third link 230 may be rotatably connected to the second link 220 through the second link shaft 224.

The fourth link coupling hole 233 may be disposed farther from the wheel coupling portion 234 than the third link coupling hole 232.

The third link 230 is coupled to the wheel unit 300. In this case, a wheel housing 320 is coupled to an inner surface (surface facing the robot body 100) of the third link body 231, and the wheel 310 is rotatably coupled to an outer surface (back surface of the inner surface) of the third link body 231.

Meanwhile, the wheel coupling portion 234 is formed on the third link body 231. Specifically, the wheel coupling portion 234 is formed at the other side of the third link body 231 in the longitudinal direction.

For example, the wheel coupling portion 234 may be formed in a circular hole shape. The wheel motor MW may be accommodated in the wheel coupling portion 234.

Meanwhile, in a state in which the robot 1 stands on the ground, the wheel coupling portion 234 may be disposed vertically under the robot body 100. For example, in the state in which the robot 1 stands on the ground, the wheel coupling portion 234 may be disposed vertically under the suspension motor MS.

The suspension motor MS is relatively heavy among the components accommodated in the robot body 100. Therefore, the entire weight of the robot body 100 may be concentrated vertically under the suspension motor MS.

With this configuration, the wheel 310 coupled to the wheel coupling portion 234 can maintain the balance of the robot body 100 by supporting a lower side of the center of gravity of the robot body 100.

Referring to FIGS. 1 to 7, the wheel unit 300 may be rotatably coupled to the leg unit 200 and may roll along the ground.

The wheel unit 300 includes the wheel 310 that is in contact with the ground and rolls along the ground, and the wheel housing 320 in which the wheel motor MW is accommodated.

The wheel 310 is provided to have a predetermined radius and a predetermined width in the axial direction. As shown in FIG. 3, when viewing the robot 1 from the front, the side frame 130 and the leg unit 200 may be disposed vertically above the wheel 310. In addition, as shown in FIG. 5, when viewing the side surface of the robot 1, the suspension motor MS, the first link coupling hole 131, and the second link coupling hole 132 may be disposed vertically above the wheel 310.

In addition, referring to FIG. 2, the suspension motor MS, the first link coupling hole 131, and the second link coupling hole 132 may be disposed vertically above the wheel 310.

The wheel 310 includes a wheel frame 311 formed in a circular shape. The wheel frame 311 may be formed in a cylindrical shape with an open one side facing the shaft of the wheel motor MW. Therefore, a weight of the wheel frame 311 can be reduced.

However, when the wheel frame 311 is formed in a cylindrical shape, the overall rigidity of the wheel frame 311 can be reduced. In consideration of such a point, the rib (not shown) for reinforcing rigidity may be formed on each of the inner and outer surfaces of the wheel frame 311.

A wheel tire 312 is coupled to an outer circumferential surface of the wheel frame 311. The wheel tire 312 may be formed in an annular shape with a diameter of the wheel tire 312 fitted into the outer circumferential surface of the wheel frame 311.

Grooves of a predetermined pattern may be recessed in the outer circumferential surface of the wheel tire 312 to increase a grip force of the wheel tire 312.

In one embodiment, the wheel tire 312 may be made of an elastic rubber material.

The wheel housing 320 may have a cylindrical shape with an open one side in the axial direction so that the wheel motor MW is accommodated therein. In this case, a closed portion of the wheel housing 320 may be coupled to an inner surface of the third link 230. With this configuration, it is possible to prevent an external foreign substance from flowing into the wheel housing 320.

Meanwhile, the wheel housing 320 may be provided with a sensor for measuring a distance to the ground. For example, the sensor may be a time of flight sensor (ToF sensor). With this configuration, a controller 500 may determine whether the wheel 310 is in contact with the ground.

The wheel 310 is rotatably coupled to the leg unit 200. Specifically, the wheel 310 is rotatably coupled to an outer surface of the third link 230.

The wheel motor MW may provide a driving force to the wheel 310. The wheel motor MW may generate a rotational force by receiving power from the battery 600.

The wheel motor MW may be accommodated in the wheel housing 320. In addition, the wheel motor MW may pass through the wheel coupling portion 234 of the third link 230, and the shaft of the wheel motor MW may be coupled to the wheel frame 311 of the wheel 310. That is, the wheel motor MW may be an in-wheel motor.

With this configuration, when the wheel motor MW is driven, the wheel 310 may roll along the ground while rotating, and the robot 1 may move along the ground.

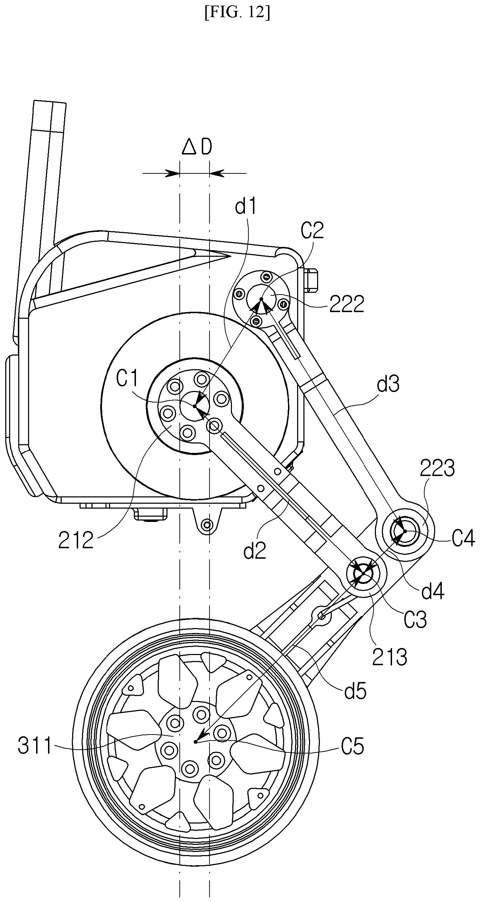

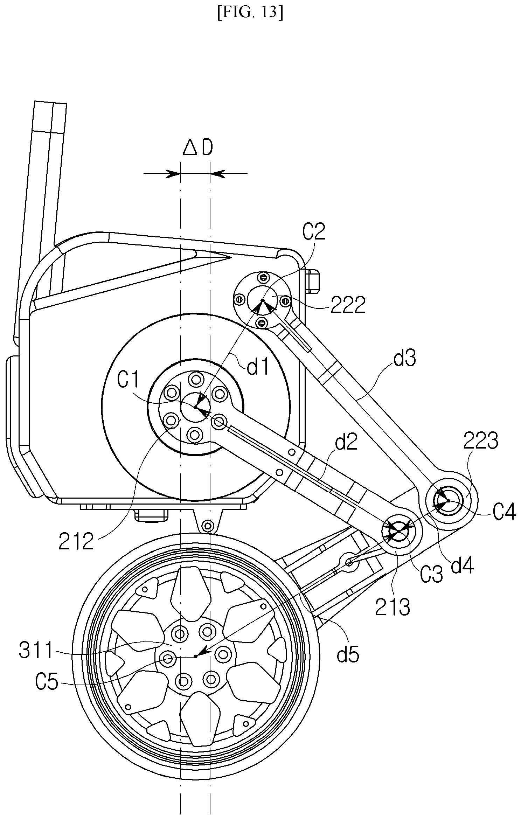

FIGS. 12 and 13 are views for describing a change in location of a wheel according to the movement of the leg unit in the robot according to one embodiment of the present disclosure, and FIG. 14 is a view for describing a relationship between the arrangement of the wheel and the arrangement for coupling with a lower functional module in the robot according to one embodiment of the present disclosure.

Referring FIGS. 12 to 14, the balance of the robot 1 according to one embodiment of the present disclosure will be described as follows.

The robot 1 according to the embodiment of the present disclosure may support the robot body 100 through the four-bar linkage structure and maintain the balance of the robot body 100.

The balance of the robot 1 in the front-rear direction according to one embodiment of the present disclosure will be described with reference to FIGS. 12 and 13 as follows.

The leg unit 200 is provided on each of both side surfaces of the robot body 100. Specifically, the first link 210 and the second link 220 are rotatably coupled to the side frames 130 provided at both sides of the robot body 100, and the first link 210 and the second link (220) is link-coupled to the third link 230. That is, the robot 1 supports the robot body 100 through the four-bar linkage composed of the side frame 130, the first link 210, the second link 220, and the third link 230.

In this case, when viewing the side surface of the robot body 100 as shown in FIGS. 12 and 13, the robot body 100 may be disposed vertically above the wheel 310. With this configuration, the wheel 310 can stably support the load of the robot body 100.

In particular, the motor coupling portion 212 may be disposed vertically above the wheel 310. With this configuration, the wheel 310 can stably support the motor coupling portion 212 to which the load of the robot body 100 is intensively transmitted and maintain the balance of the robot 1.

Meanwhile, when viewing the side surface of the robot body 100 as shown in FIGS. 12 and 13, the coupling bar 151 may be disposed vertically above the wheel 310. With this configuration, even in a state in which the lower functional module 800 is coupled to the robot body 100, the entire load of the robot 1 may be concentrated vertically above the wheel 310, and the wheel 310 can stably support the robot 1.

Meanwhile, in the embodiment of the present disclosure, the gravity compensator 215 generates a restoring force in a direction of lifting the robot body 100. Therefore, even in a state in which the suspension motor MS is not driven, the pair of leg units 200 can maintain the state of lifting the robot body 100 to a predetermined height from the ground.

Meanwhile, the robot 1 according to the embodiment of the present disclosure can maintain the balance by lifting any one of the pair of wheels 310 to pass an obstacle or driving the suspension motor MS when the height of the robot body 100 is lowered for charging, etc.

When the suspension motor MS is driven, the link coupling portion 213 moves upward as the first link 210 rotates about the motor coupling portion 212. In addition, the third link 230 is moved by rotating the first link 210. In addition, the second link 220 is rotated by being pushed by the third link 230. As a result, one end portion of the third link 230 may be moved rearward, and the other end portion of the third link 230 may be moved upward.

With this configuration, even when the wheel 310 moves upward and downward, a movement range of the wheel 310 in the front-rear direction may be limited. Therefore, the robot 1 can stably maintain the balance.

Therefore, the robot 1 according to the present disclosure may pass obstacles of various heights using the four-bar linkage structure.

In the robot 1 according to the embodiment of the present disclosure, a center C1 of the first link coupling hole 131 and a center C2 of the second link coupling hole 132 may be disposed at a predetermined first distance d1. In addition, a center C1 of the motor coupling portion 212 of the first link 210 and a center C3 of the link coupling part 213 of the first link 210 may be disposed at a predetermined second distance d2. In addition, a center C2 of the frame coupling portion 222 of the second link 220 and a center C4 of the link coupling portion 223 of the second link 220 may be disposed at a predetermined third distance d3. In addition, a center C3 of the third link coupling hole 232 of the third link 230 and a center C4 of the fourth link coupling hole 233 of the third link 230 may be disposed at a predetermined fourth distance d4. In addition, the center C3 of the third link coupling hole 232 of the third link 230 and a rotation center C5 of the wheel coupling portion 234 of the third link 230 may be disposed at a predetermined fifth distance d5.

Meanwhile, C5 can be defined as the rotation center of the wheel.

In this case, the first distance d1, the second distance d2, the third distance d3, the fourth distance d4, and the fifth distance d5 may be disposed to have a predetermined length ratio. For example, the first distance d1 may be 0.5 times or more and 0.6 times or less the fifth distance d5. The second distance d2 may be 0.95 times or more and 1.05 times or less the fifth distance d5. The third distance d3 may be 1.1 times or more and 1.2 times or less the fifth distance d5. The fourth distance d4 may be 0.2 times or more and 0.3 times or less the fifth distance d5.

With this configuration, even when the third link 230 is moved by driving the motion motor MS, a movement distance of the wheel coupling portion 234 in the front-rear direction can be maintained within a predetermined deviation ΔD. For example, even when the third link 230 is moved, the movement distance of the wheel coupling portion 234 in the front-rear direction can be maintained within 2% of the fifth distance d5.

Therefore, while the robot 1 is moving, the center of gravity of the robot body 100 may be disposed vertically above the wheel 310. Therefore, the robot 1 can be prevented from shaking in the front-rear direction while moving and can maintain the balance.

In addition, according to the robot 1 according to the present disclosure, even when the wheels 310 move upward while the robot 1 passes an obstacle, the balance can be maintained without changing locations of the wheels 310 in the front-rear direction.

The balance of the robot 1 in a left-right direction according to the embodiment of the present disclosure will be described with reference to FIG. 14 as follows.

As shown in FIG. 14, the robot body 100 is supported by the pair of leg units 200 and the pair of wheel units 300.

The load of the robot body 100 may be transmitted to the wheel 310 through the leg units 200, and the wheel 310 may support the leg units 200 and the robot body 100.

In this case, the pair of leg units 200 may be disposed symmetrically (line symmetrically). In particular, the link-coupled portions of the pair of leg units 200 may be disposed in parallel.

Specifically, the motor coupling portions 212 of the pair of first links 210 may be disposed in parallel. The link coupling portions 213 of the pair of first links 210 may be disposed in parallel. The frame coupling portions 222 of the pair of second links 220 may be disposed in parallel. The link coupling portions 223 of the pair of second links 220 may be disposed in parallel. The wheel coupling portions 234 of the pair of third links 230 may be disposed in parallel.

With this configuration, the module coupling space 153 having a predetermined width ΔS is formed at the lower side of the robot body 100. The module coupling space 153 may be formed in parallel to the pair of leg units 200. In addition, the module coupling space 153 may be formed in parallel to the pair of wheels 310.

At least one motor including the suspension motor MS and the battery 600 may be provided inside the robot body 100. In addition, when the robot 1 is placed on the ground, the entire load of the robot body 100 in a state in which the motor and the battery 600 are accommodated may be applied to the leg units 200.

In particular, since the robot 1 according to one embodiment of the present disclosure is provided with the leg unit 200 at both side surfaces of the robot body 100, the load of the robot body 100 is concentrated on the pair of side frames 130 and the pair of leg units 200.

In this case, as shown in FIG. 14, based on when viewing the front surface of the robot 1 from the front of the robot 1, the side frame 130 and the leg units 200 may all be disposed vertically above the wheel unit 300.

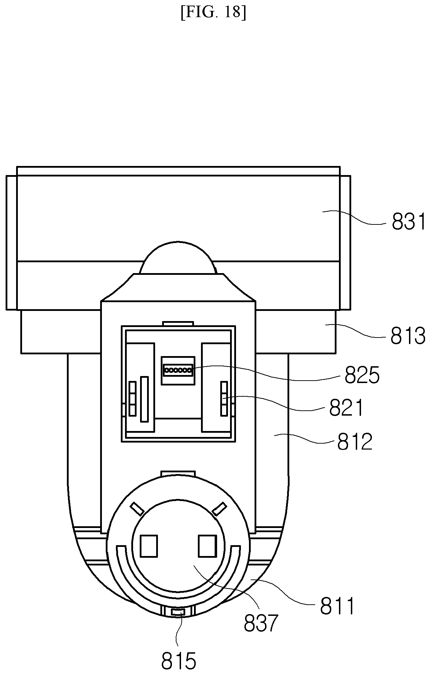

For example, when viewing the front surface of the robot 1 as shown in FIG. 18, the side frame 130 and the leg units 200 may be disposed in a virtual space extending the wheel 310 in the vertical direction.

That is, as shown in FIG. 14, both the side frames 130 and the leg units 200 may all be disposed between a virtual line al vertically extending the outer end portion of the wheel 310 in the axial direction and a virtual line a2 vertically extending the inner end portion of the wheel 310 in the axial direction.

In addition, thicknesses (length of the robot 1 in the left-right direction) of the leg unit 200 and the side frame 130 are smaller than a thickness (length of the robot 1 in the left-right direction, ΔW) of the wheel 310.

With this configuration, the entire load of the robot body 100 applied to the side frames 130 and the leg units 200 can be stably supported by the wheels 310 disposed thereunder in the direction of gravity.

Therefore, according to the robot 1 according to the embodiment of the present disclosure, the balance of the robot body 100 can be stably maintained by concentrating the load of the robot body 100 vertically above the pair of wheels 310.

In addition, the leg unit 200 may be pressed vertically downward by the load of the robot body 100, and the application of the load of the robot 1 in the left-right direction can be prevented, thereby preventing the robot 1 from shaking in the left-right direction.

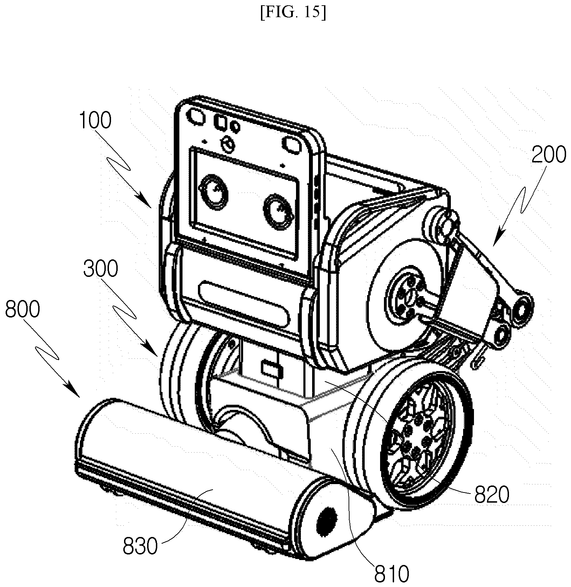

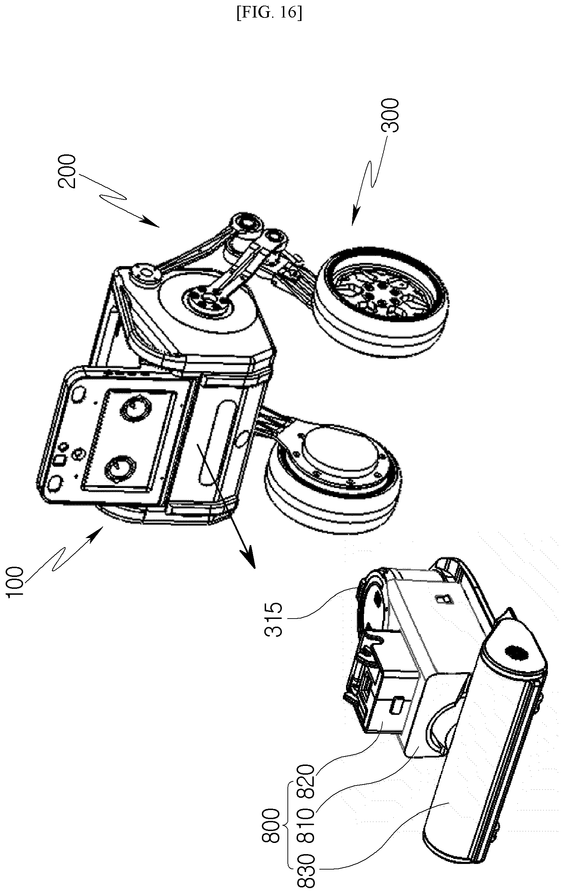

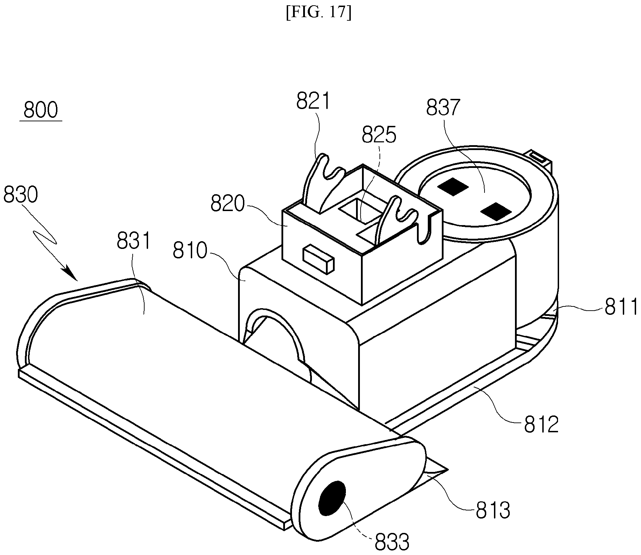

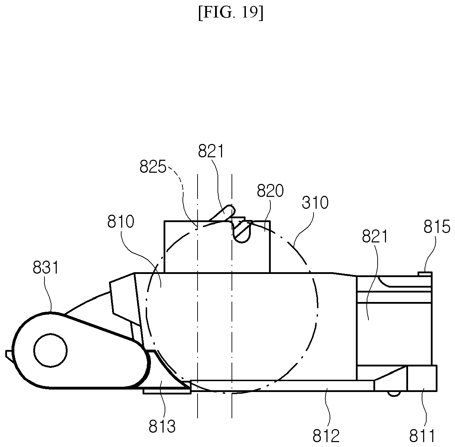

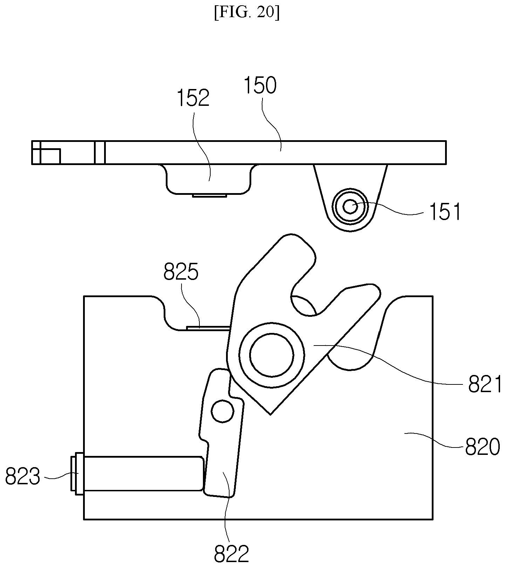

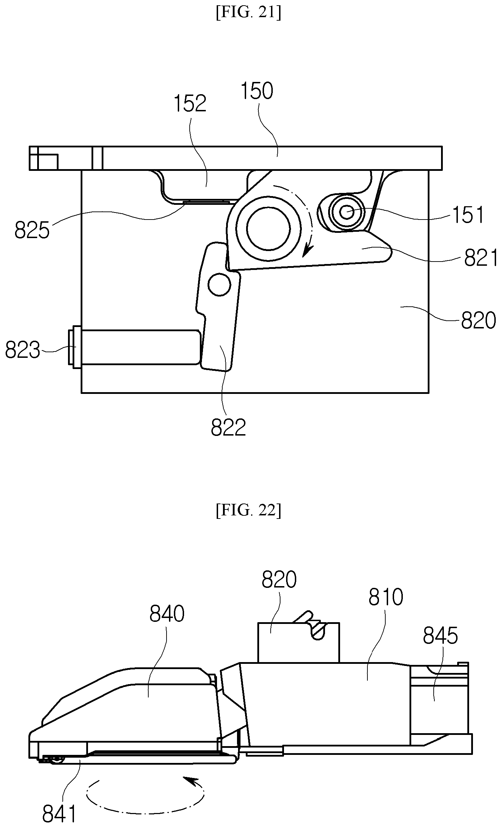

FIG. 15 is a perspective view of a robot in a state in which the lower functional module is coupled to a robot body in the robot according to a first embodiment of the present disclosure, FIG. 16 is a perspective view of the robot in a state before the lower functional module is coupled to the robot body in the robot according to the first embodiment of the present disclosure, FIG. 17 is a perspective view of the lower functional module according to the first embodiment of the present disclosure, FIG. 18 is a plan view of the lower functional module according to the first embodiment of the present disclosure, FIG. 19 is a right side view of the lower functional module according to the first embodiment of the present disclosure, FIG. 20 is a view showing a state before a coupling bar is coupled to a coupling hook in the robot according to the first embodiment of the present disclosure, and FIG. 21 is a view showing a state after the coupling bar is coupled to the coupling hook in FIG. 20.

Referring to FIG. 15, the robot includes the lower functional module 800. The lower functional module 800 is a component coupled to the robot body 100 to provide various functions to the home robot.

The lower functional module 800 is detachably coupled to the robot body 100. For example, the robot may perform dry cleaning when the lower functional module 800 according to the first embodiment is coupled to the robot body 100, the robot may perform wet cleaning when the lower functional module 800 according to the second embodiment is coupled to the robot body 100, and the robot may transport another object when the lower functional module 800 according to the third embodiment is coupled to the robot body 100.

The lower functional module 800 is coupled to the lower surface of the robot body 100. The coupling bar 151 and the charging terminal 152 to be coupled to the lower functional module 800 are disposed on the lower cover 150 of the robot body 100.

The coupling bar 151 of the lower cover 150 is caught on a coupling hook 821 of the lower functional module 800, and thus the lower functional module 800 is physically coupled to the robot body 100.

The charging terminal 152 of the lower cover 150 is coupled to a corresponding terminal 825 of the lower functional module 800, and thus the lower functional module 800 is electrically connected to the robot body 100.

When the lower functional module 800 is coupled to the robot body 100, the lower functional module 800 is disposed between the left leg unit and the right leg unit. That is, when the lower functional module 800 is coupled to the robot body 100, the lower functional module 800 is disposed between the left wheel 310 and the right wheel 310.

The robot body 100 moves forward from the rear of the lower functional module 800 and approaches the lower functional module 800. When the charging terminal 152 of the lower cover 150 of the robot body 100 and the corresponding terminal 825 of the lower functional module 800 are disposed to overlap vertically, the robot body 100 moves downward, and the charging terminal 152 is in contact with the corresponding terminal 825, and thus the robot body 100 and the lower functional module 800 are electrically connected, and the coupling hook 821 is caught on the coupling bar 151, and thus the robot body 100 is physically connected to the lower functional module 800.

The lower functional module 800 is disposed between the left wheel 310 and the right wheel 310 when coupled to the robot body 100. Specifically, the lower functional module 800 is disposed in the module coupling space 153 formed between the pair of leg units. The lower functional module 800 may be disposed in the space between the lower portion of the robot body 100 and the pair of wheels 310, thereby minimizing the volume in the state in which the lower functional module 800 is coupled to the robot.

A virtual vertical line extending upward from the rotation center C5 of the wheel is disposed between the coupling bar 151 and the charging terminal 152. Referring to FIG. 13, when viewed from the left, the virtual vertical line extending upward from the rotation center C5 of the wheel is disposed between the coupling bar 151 and the charging terminal 152. When the lower functional module 800 is coupled to the robot body 100, the lower functional module 800 faces a great area on the ground, and thus no behavior for maintaining the robot's attitude is required. Therefore, the rotation center C5 of the wheel is always disposed between the coupling bar 151 and the charging terminal 152, and the robot may travel more stably.

The lower functional module 800 may be composed of a body 810 and a robot body fastening unit 820.

The lower functional module body 810 forms the exterior of the lower functional module 800 and has a space in which components are stored.

Other components may be stored inside the lower functional module body 810.

Referring to FIGS. 17 to 19, the lower functional module 800 includes a rear guide 811. The rear guide 811 is a component for guiding the robot body 100 to a location at which the lower functional module 800 is coupled.

The rear guide 811 is formed to protrude rearward from a rear surface of the lower functional module body 810.

The rear guide 811 may be coupled to a lower surface of the lower functional module body 810. The rear guide 811 protrudes rearward from the lower functional module body 810.

The rear guide 811 guides the robot to the side surface of the lower functional module body 810. For example, when the robot is biased to the right and approaches the lower functional module 800, the left wheel 310 of the robot is in close contact with a left side surface of the rear guide 811, and the robot moves to the left. Conversely, when the robot is biased to the left and approaches the lower functional module 800, the right wheel 310 of the robot is in close contact with a right side surface of the rear guide 811, and the robot moves to the right. Therefore, the robot and the lower functional module 800 are aligned in line.

The rear guide 811 has an outer end disposed in front of the center thereof. Therefore, an inclined surface facing the left front is formed at the left side of the center of the rear guide 811, and an inclined surface facing the right front is formed at the right side of the center of the rear guide 811. In this case, as described above, when the robot is biased to one side and approaches the lower functional module 800, the robot moves laterally along the inclined surface, and the robot and the lower functional module 800 may be aligned in line.

The rear guide 811 forms a curved surface that is convex rearward when viewed from the top. Specifically, the rear guide 811 may be formed in a C shape with an open front. With this arrangement, when the one side wheel 310 is in contact with the rear guide 811, the rear guide 811 may more easily guide the wheel 310 to the left or right.

The rear guide 811 has a front end disposed under a rear end thereof. That is, the rear end of the rear guide 811 is formed at a predetermined height or higher, and a height of the center of the rear guide 811 is formed to be higher than a height of the outer end of the rear guide 811.

With this arrangement, when the robot is biased to one side and approaches the lower functional module 800, the robot may be effectively guided in one direction at the rear end of the rear guide 811, and the wheel 310 does not go up an upper portion of the rear guide. Conversely, since a front end of the rear guide 811 is disposed under the rear end of the rear guide 811, a contact area between the rear guide 811 and the inner surface of the wheel 310 can be reduced, thereby reducing a frictional force, and thus the robot to which the lower functional module 800 is coupled may move more easily.

Referring to FIGS. 17 to 19, the lower functional module 800 includes a lateral guide 812. The lateral guide 812 is a component for guiding the robot body 100 to a location at which the lower functional module 800 is coupled.

The lateral guide 812 is formed to protrude outward from one side surface of the lower functional module body 810.

The lateral guide 812 may be coupled to the lower surface of the lower functional module body 810.

The lateral guide 812 may be formed integrally with the rear guide 811.

The lateral guide 812 may be extend forward from the front end of the rear guide 811.

Referring to FIGS. 17 to 19, the lower functional module 800 includes a front stopper 813. The front stopper 813 is a component for preventing the robot body 100 from moving forward more than a specific location.

The front stopper 813 is formed to protrude outward from the lower functional module body 810, and a rear surface thereof is disposed adjacent to the wheel 310 of the robot body 100.

When the robot body 100 passes forward from the lower functional module 800, a front end of the wheel 310 is caught on the front stopper 813 to prevent the robot body 100 from moving forward.

The left front stopper 813 is formed to protrude leftward from a left side surface of the lower functional module body 810, and the right front stopper 813 is formed to protrude rightward from a right side surface of the lower functional module body 810.

Referring to FIG. 19, a rear surface of the front stopper 813 has an upper end disposed in front of a lower end thereof. Specifically, the front stopper 813 includes a front upward inclined surface. Alternatively, the rear surface of the front stopper 813 may extend in a circumferential direction of the wheel 310.

When the robot body 100 moves forward, the robot is caught on the front stopper 813 and may not move forward any more. When the robot body 100 moves forward quickly, the robot may move up a predetermined distance along the rear surface of the front stopper 813 and then re-move down.

The front stopper 813 is disposed to be spaced apart from the wheel 310 when the lower functional module 800 is coupled to the robot body 100. Therefore, since friction with the front stopper 813 does not occur when the wheel 310 rotates, the robot body 100 may be easily moved.

The lower functional module 800 includes a guide light radiation unit 815. The guide light radiation unit 815 is a component for guiding the robot body 100 to approach the lower functional module 800 in a correct direction.

The guide light radiation unit 815 is disposed in the lower functional module body 810 and radiates guidance light, which enables the robot body 100 to be recognized, rearward. Referring to FIG. 16, the guide light irradiation unit 815 radiates guide light backward toward the robot body 100 (marked by dotted lines).

The guide light radiation unit 815 may be disposed at a rear end of the lower functional module body 810.

The robot body 100 includes a detection sensor (not shown) for detecting the guide light radiated from the guide light radiation unit 815. When the robot body 100 detects the guide light, the robot may approach the lower functional module 800 along the guide light.

The robot body fastening unit 820 is a component for coupling the lower functional module 800 to the robot body 100.

Referring to FIGS. 20 and 21, the robot body fastening unit 820 is disposed at one side of the lower functional module body 810 and fixes the lower functional module body 810 to the robot body 100 when coupled. Specifically, the robot body fastening unit 820 is disposed on an upper surface of the lower functional module body 810. The robot body fastening unit 820 may be fixed to the lower cover 150 of the robot body 100.

The robot body fastening unit 820 includes the coupling hook 821 and the corresponding terminal 825.

The coupling hook 821 disposed in the lower functional module 800 is caught on the coupling bar 151 disposed on the lower cover 150 of the robot body 100, and thus the robot body fastening unit 820 couples the lower functional module 800 to the robot body 100.

The coupling hook 821 is disposed in the lower functional module body 810. Specifically, a lower end of the coupling hook 821 is rotatably coupled to the lower functional module body 810.

The coupling hook 821 is caught on one side of the robot body 100 when the lower functional module 800 is coupled to the robot body 100. Specifically, one end of the coupling hook 821 is fixed by being caught on the coupling bar 151.

A locking protrusion caught on a hook link 822 is formed at the other end of the coupling hook 821.

The robot body fastening unit 820 includes the hook link 822. The hook link 822 is a component for preventing the coupling hook 821 from being released when the coupling hook 821 is caught on the coupling bar 151.

The hook link 822 is rotatably coupled to the lower functional module body 810.

A locking protrusion caught on the locking protrusion of the coupling hook is formed at one end of the hook link 822. That is, the locking protrusion of the coupling hook 821 is caught on the locking protrusion of the hook link 822.

The other end of the hook link 822 is disposed adjacent to a hook switch 823.

The robot body fastening unit 820 includes the hook switch 823. The hook switch 823 is a component for releasing the catching between the coupling hook 821 and the coupling bar 151.

The hook switch 823 is movably disposed in the lower functional module body 810. Specifically, the hook switch 823 is adjacent to the other end of the hook link 822.

Referring to FIGS. 20 and 21, when the hook switch 823 is pressed, the hook link 822 may rotate clockwise, and the coupling hook 821 may rotate clockwise, and thus the robot body 100 may be separated from the lower functional module 800.

The coupling bar 151 is disposed in the robot body 100. Specifically, the coupling bar 151 is disposed on the lower cover 150 of the robot body 100.

The charging terminal 152 is disposed on the lower cover 150 of the robot body 100. A socket recessed downward is formed on the upper surface of the lower functional module body 810, and the corresponding terminal 825 is disposed on the socket. When the charging terminal 152 is inserted into the socket and is in contact with the corresponding terminal 825, the robot body 100 and the lower functional module 800 may be electrically connected.

The charging terminal 152 disposed on the lower cover 150 of the robot body 100 or the corresponding terminal 825 of the lower functional module 800 may be formed in the same shape as the pogo pin 142 disposed on the upper cover 140 of the robot body 100.

According to the first embodiment of the present disclosure, the lower functional module 800 may perform dry cleaning.

The lower functional module 800 according to the first embodiment includes a suction motor (not shown), a suction unit 831, and a dust bin 837.

The suction motor is disposed in the lower functional module body 810 to generate a negative pressure. The suction motor may be disposed inside the lower functional module body 810.

The suction unit 831 is disposed at an upstream of the suction motor to suction dust present in a cleaning area. The suction unit 831 may be disposed in front of the lower functional module body 810.

The dust bin 837 is disposed at a downstream of the suction motor to collect dust. The dust bin 837 may be disposed behind the lower functional module body 810. In this case, the guide light radiation unit 815 may be disposed at one side of the dust bin 837.

The lower functional module 800 according to the first embodiment may further include a brush 833. The brush 833 sweeps away a foreign substance present in the cleaning area for effective suction. The brush 833 may be disposed on the suction unit 831.

The lower functional module 800 according to the first embodiment may further include a battery (not shown). The battery of the lower functional module drives a suction motor (not shown) or provides power for rotating the brush 833.

The battery of the lower functional module 800 may be disposed inside the lower functional module body 810.

The battery of the lower functional module 800 may be electrically connected to the battery of the robot body 100. Therefore, the battery of the lower functional module 800 may be charged using the battery of the robot body 100, and the battery of the robot body 100 may be charged using the battery of the lower functional module 800.

FIG. 22 is a right side view of the lower functional module having a wet cleaning function according to a second embodiment of the present disclosure.

According to the second embodiment of the present disclosure, the lower functional module 800 may perform wet cleaning.

The lower functional module 800 according to the second embodiment includes a mop 841 and a water container 845.

The mop 841 is disposed at one side of the lower functional module body 810 to mop the cleaning area.

The mop 841 may be disposed on the lower surface of the lower functional module body 810.

The mop 841 may be a spin mop that rotates about a rotational axis. In this case, the rotational axis of the mop 841 may be disposed perpendicular to the ground.

The water container 845 is disposed in the lower functional module body 810 to store water and supply water to the mop 841.

The water container 845 may be disposed behind the lower functional module body 810. For example, the water container 845 may be disposed at a location of the dust bin 837 in the first embodiment.

The lower functional module 800 according to the second embodiment may further include a mop motor (not shown). The mop motor transmits power for rotating the mop 841 to the mop 841.

The mop motor may be disposed inside the lower functional module body 810.

The lower functional module 800 according to the second embodiment may further include a battery (not shown). The battery of the lower functional module drives the mop motor or provides power for pumping water in the water container 845 to the mop 841.

The battery of the lower functional module 800 may be disposed inside the lower functional module body 810.

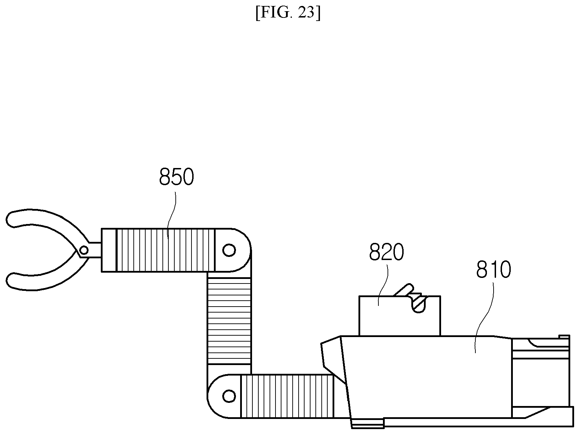

FIG. 23 is a right side view of the lower functional module having a transport function according to a third embodiment of the present disclosure.

According to the third embodiment of the present disclosure, the lower functional module 800 may transport another object (object to be transported).

The lower functional module 800 according to the third embodiment includes a gripper arm 853 and a gripper 851.

The gripper arm 853 is movably coupled to the lower functional module body 810.

The gripper arm 853 may be formed by rotatably coupling a plurality of arms. In this case, the gripper arm 853 may have a wide work radius by rotating the plurality of arms.

The gripper 851 is disposed on an end portion of the arm to fix the object to be transported.

The gripper 851 may pick up and lift a mobile phone, a large foreign substance, etc. The lower functional module 800 according to the third embodiment may transport the object to be transported to another location when the gripper 851 lifts the object to be transported.

Although the present disclosure has been described in detail through specific embodiments, this is intended to specifically describe the present disclosure, and it is apparent that the present disclosure is not limited thereto, and the present disclosure can be modified or improved by those skilled in the art without departing from the technical spirit of the present disclosure.

All simple modifications or changes of the present disclosure fall within the scope of the present disclosure, and the specific scope of the present disclosure will be made clear by the appended claims.

### DESCRIPTION OF REFERENCE NUMERALS

100: robot body
110: front cover
120: rear cover
130: side frame
140: upper cover
150: lower cover
151: coupling bar
152: charging terminal
153: module coupling space
200: leg unit
210: first link
220: second link
230: third link
300: wheel unit
310: wheel
400: sensor unit
500: controller
600: battery
700: upper functional module
800: lower functional module
810: body
811: rear guide
812: lateral guide
813: front stopper
815: guide light radiation unit
820: robot body fastening unit
821: coupling hook
822: hook link
823: hook switch
825: corresponding terminal
830: dry cleaning module
840: wet cleaning module
850: transport module

## Claims

1. A robot comprising:
a robot body in which a motor and a battery are accommodated;
a leg unit coupled to each of both side surfaces of the robot body;
a wheel unit rotatably coupled to the leg unit and including a wheel rolling along a ground; and
a lower functional module detachably coupled to the robot body,
wherein the lower functional module includes:
a lower functional module body forming an exterior and having a space therein; and
a robot body fastening unit disposed at one side of the lower functional module body to fix the lower functional module body to the robot body when coupled.

2. The robot of claim 1, wherein the lower functional module includes a rear guide protruding rearward from a rear surface of the lower functional module body.

3. The robot of claim 2, wherein, when viewed from the top, an outer end of the rear guide is disposed in front of a center thereof.

4. The robot of claim 2, wherein, when viewed from the top, the rear guide forms a curved surface that is convex rearward.

5. The robot of claim 2, wherein, when viewed from one side, the rear guide has a front end disposed under a rear end thereof.

6. The robot of claim 1, wherein the lower functional module includes a front stopper formed to protrude outward from the lower functional module body and having a rear surface disposed adjacent to a wheel of the robot body.

7. The robot of claim 6, wherein the rear surface of the front stopper has an upper end disposed in front of a lower end thereof.

8. The robot of claim 6, wherein the front stopper is disposed to be spaced apart from the wheel when the lower functional module is coupled to the robot body.

9. The robot of claim 1, wherein the lower functional module includes a guide light radiation unit configured to radiate guide light, which enables the robot body to be recognized, rearward.

10. The robot of claim 1, wherein the robot body fastening unit includes a coupling hook disposed above the lower functional module body and caught on one side of the robot body when the lower functional module is coupled to the robot body.

11. The robot of claim 10, wherein the robot body fastening unit further includes:
a hook link which has one end adjacent to the coupling hook and in which the other end of the coupling hook is caught on the one end when the one end of the coupling hook is coupled to the robot body; and
a hook switch adjacent to the other end of the hook link and releasing the catching the coupling hook when pressing the other end of the hook link.

12. The robot of claim 1, wherein the lower functional module performs dry cleaning by including:
a suction motor disposed in the lower functional module body to generate a negative pressure;
a suction unit disposed at an upstream of the suction motor to suction dust present in a cleaning area; and
a dust bin disposed at a downstream of the suction motor to collect the dust.

13. The robot of claim 1, wherein the lower functional module performs wet cleaning by including:
a mop disposed at one side of the lower functional module body to mop the cleaning area; and
a water container disposed in the lower functional module body to store water and supply the water to the mop.

14. The robot of claim 1, wherein the lower functional module transports an object to be transported by including:
a gripper arm movably coupled to the lower functional module body; and
a gripper disposed on an end portion of the arm to fix the object to be transported.

15. A robot comprising:
a robot body in which a motor and a battery are accommodated;
a leg unit coupled to each of both side surfaces of the robot body;
a wheel unit rotatably coupled to the leg unit to roll along a ground; and
a lower functional module detachably coupled to the robot body and disposed between a left wheel and a right wheel when coupled to the robot body.

16. The robot of claim 15, wherein the robot body includes:
a lower cover forming a lower exterior of the robot;
a coupling bar disposed on the lower cover and coupled to the lower functional module; and
a charging terminal disposed on the lower cover and electrically connected to the lower functional module, and
a virtual vertical line extending upward from a rotation center of the wheel is disposed between the coupling bar and the charging terminal.

17. The robot of claim 15, wherein the lower functional module includes:
a lower functional module body forming an exterior and having a space therein; and
a robot body fastening unit disposed at one side of the lower functional module body to fix the lower functional module body to the robot body when coupled.
